# EUROPEAN PATENT APPLICATION

(11) **EP 3 441 786 A1**
(43) Date of publication of application: **13.02.2019**
(21) Application number: 18187818.2
(22) Date of filing: 07.08.2018
(51) Int. Cl.: G01S 13/95

(54) **APPARATUS AND METHOD FOR SUPPLEMENTING SENSOR DATA**

(30) Priority: 09.08.2017 US 201715672883
(71) Applicant: Honeywell International Inc., Morris Plains, NJ 07950 (US)
(72) Inventor: KODURU, Anantha Chandrasekhar, Morris Plains, NJ 07950 (US); IDUPUNUR, Krishna, Morris Plains, NJ 07950 (US); RAO, Nayyar Azam Khan, Morris Plains, NJ 07950 (US)
(74) Representative: Houghton, Mark Phillip

(57) **Abstract**

In one embodiment, a vehicle is provided. The vehicle comprises a vehicle sensor processing system; at least one vehicle sensor, coupled to the vehicle sensor processing system, which is susceptible to shadow regions; wherein the vehicle sensor processing system is configured to be coupled to a vehicle communications system; and wherein the vehicle sensor system is configured to remotely obtain data about a shadow region in the geographic region.

## Description

### BACKGROUND

Modern aircraft utilize weather RADAR systems to identify hazardous weather in their flight path. Upon identifying such hazardous weather, a pilot of the aircraft can re-route the aircraft to avoid the hazardous weather.

Weather RADAR systems, however, may not be able to detect hazardous weather within its normal operating range, for example, due to absorption of the RADAR signals by environmental precipitation (electromagnetic energy absorbing precipitation) or because a signal is blocked by terrain. RADAR systems such as Honeywell International Inc.'s RDR-4000 weather RADAR is capable of identifying regions where RADAR returns are attenuated by precipitation and thus are not reliable. Although it is useful for pilots to be aware of regions having unreliable RADAR returns (which are known as RADAR shadow regions), it is more important for the pilots to be aware of information about such regions that is not provided by a corresponding RADAR system.

### SUMMARY

In one embodiment, a vehicle is provided. The vehicle comprises at least one vehicle sensor system configured to measure data in a geographic region; a vehicle sensor processing system coupled to the at least one vehicle sensor system; a vehicle communications system coupled to the vehicle sensor processing system; and wherein the vehicle sensor system is configured to remotely obtain data about a shadow region in the geographic region.

### DRAWINGS

Understanding that the drawings depict only exemplary embodiments and are not therefore to be considered limiting in scope, the exemplary embodiments will be described with additional specificity and detail through the use of the accompanying drawings, in which:
Figure 1 illustrates a block diagram of one embodiment of a sensor system network which provides data to at least one vehicle corresponding to the at least one vehicle's sensor system shadow regions;
Figure 2 illustrates a block diagram of one embodiment of a vehicle with at least one vehicle sensor system that is configured to receive data for the at least one vehicle sensor system's shadow regions;
Figure 3 illustrates a block diagram of one embodiment of an operations center which is configured to obtain, store, and transmit data about an environment;
Figure 4A illustrates one embodiment of a method of requesting, receiving and using data for shadow regions;
Figure 4B illustrates one embodiment of a weather RADAR system display exhibiting integrated measured data and received data; and
Figure 5 illustrates one embodiment of a method of an operations center configured to provide data for shadow regions.

In accordance with common practice, the various described features are not drawn to scale but are drawn to emphasize specific features relevant to the exemplary embodiments. Reference characters denote like elements throughout figures and text.

### DETAILED DESCRIPTION

In the following detailed description, reference is made to the accompanying drawings that form a part hereof, and in which is shown by way of illustration specific illustrative embodiments. However, it is to be understood that other embodiments may be utilized and that structural, mechanical, and electrical changes may be made. Furthermore, the method presented in the drawing figures and the specification is not to be construed as limiting the order in which the individual steps may be performed. The following detailed description is, therefore, not to be taken in a limiting sense.

A remote system that provides data for geographic region(s) corresponding to unreliable sensor signals may be used to overcome the above referenced problems. Geographic regions corresponding to unreliable sensor signals are referred to herein as "shadow regions". The remote system can provide, to a vehicle, information (including but not limited to hazards, about such region(s)) to supplement the information generated by reliable signals from the vehicle's sensor system(s). Thus, for example, a display coupled to, or part of, the vehicle's sensor system(s) can display reliable information which the vehicle's sensor system(s) are unable to obtain, in addition to reliable information obtained from the vehicle's sensor system(s). In one embodiment, the information remotely provided is limited to hazardous data (as will be subsequently be further described). In another embodiment, the information remotely provided is not limited to hazardous data.

For pedagogical purposes, unless otherwise described, vehicles may be exemplified as aircraft. However, the embodiments of the invention are equally applicable to other vehicles, including other airborne vehicles (such as helicopters), space borne vehicles, terrestrial vehicles (such as automobiles, trucks, and trains), and seaborne and submersible vehicles (such as ships).

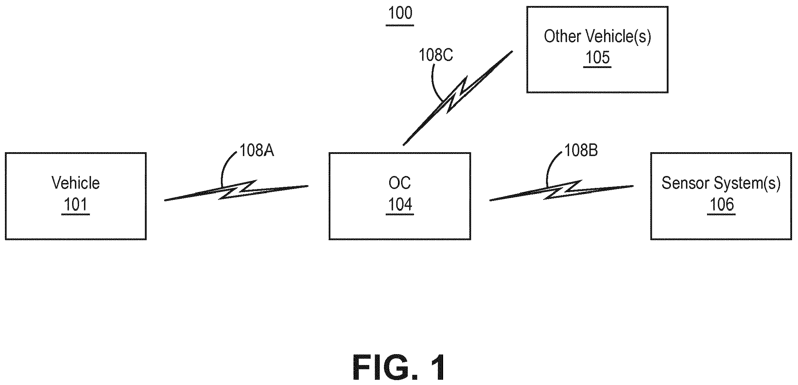

Figure 1 illustrates a block diagram of one embodiment of a sensor system network 100 which provides data to at least one vehicle corresponding to the at least one vehicle's sensor system shadow regions. The illustrated sensor system network 100 includes a vehicle 101, an operations center (OC) 104, and at least one sensor system (sensor system(s)) 106. For example, the sensor system(s) 106 may include RADAR system(s) such as the U.S. NEXRAD weather RADAR system, particle detector system(s) such as optical particle detector system(s), image sensor system(s) (such visual and/or infrared imaging systems), and/or sensor(s) of any other type.

In one embodiment, the operations center 104 is coupled to the vehicle 101 and the sensor system(s) 106 respectively through a first communications link 108A and a second communications link 108B. In another embodiment, at least one other vehicle (other vehicle(s)) 105 is coupled to the operations center 104, *e.g.* through a third communications link 108C. In another embodiment, the other vehicle(s) 105 include at least one aircraft, at least one satellite, and/or at least one terrestrial vehicle (*e.g.* a car or truck). The other vehicle(s) 105 include at least one sensor system such as a RADAR system (*e.g*. a weather RADAR system), a particle sensor system, an image sensor system, and/or sensors or any other type. Each of the first, second and third communications links 108A, 108B 108C may be an HF, VHF, satellite, cellular network, AeroMACs WiMax and/or any other type of communications link.

Sensor system(s) herein may include RADAR systems of any type, such as of vehicle collision RADAR systems and/or weather RADAR systems. However, for pedagogical purposes, some illustrated RADAR systems are weather RADAR systems.

In one embodiment, the operations center 104 may be a public, *e.g.* government, operations center such as an air traffic control center or another operations center, *e.g.* that utilizes the US Federal Aviation Administration's (FAA's) or a similar governmental entity's system wide information management system to distribute data. Alternatively, the operations center may be a privately run, *e.g.* a commercial, operations center.

In one embodiment, as will be further described below, the vehicle 101 transmits a request to the operations center 104 for data in shadow regions of its vehicle sensor system(s). For example, such information, may include or be limited to hazardous data, *e.g.* about terrain (such as mountains and buildings), weather (such as hail, lightning, volcanic ash, convective weather (*e.g*. turbulent weather), and/or weather that will likely cause icing on the vehicle such as super-cooled liquid water droplets), animals (such as flocks of birds), and/or other vehicles (such as unmanned aerial vehicles (UAVs) and/or other aircraft). The operations center 104 obtains such data from the sensor system(s) 106 through the second communications link 108B and/or other vehicle(s) 105, such as other aircraft, through a third communications link 108C. The operations center 104 provides the requested data to the vehicle 101. In another embodiment, vehicles which obtain data, such as data about shadow regions from the operations center 104 have to pay a, *e.g.* periodic, fee for such a service.

In one embodiment, data communicated over the first communications link 108A, the second communications link 108B, and/or the third communications link 108C is encrypted to prevent third parties from altering the data or sending false data appearing to originate from a reliable source. In a further embodiment, the vehicle 101, operations center 104, the sensor system(s) 106, and/or the other vehicle(s) 105 include encryption and decryption technology, such as public key encryption and decryption technology, to facilitate encryption and decryption of data.

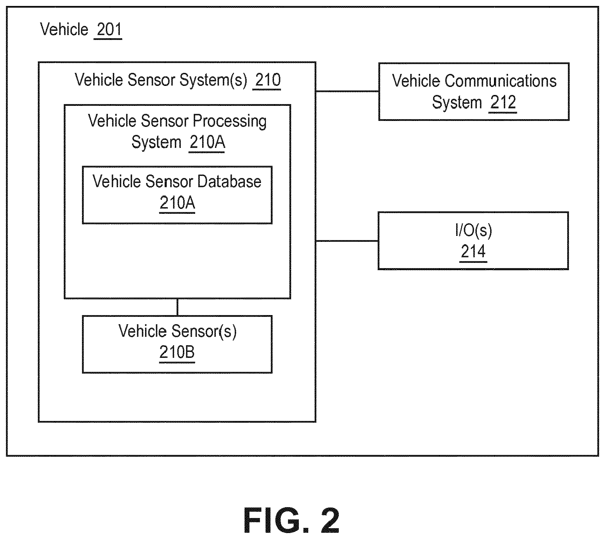

Figure 2 illustrates a block diagram of one embodiment of a vehicle 201 with at least one vehicle sensor system that is configured to receive data for the at least one vehicle sensor system's shadow regions. The vehicle 201 includes at least one vehicle sensor system (vehicle sensor system(s)) 210 coupled to a vehicle communications system 212. In another embodiment, the vehicle sensor system(s) 210 are coupled to at least one input / output device (I/O(s)) 214, particularly if the vehicle sensor system(s) 210 does not include the corresponding input / output devices.

In one embodiment, the vehicle sensor system(s) 210 include a vehicle processing system 210A and at least one vehicle sensor (vehicle sensor(s)) 210B. In another embodiment, the vehicle sensor system(s) 210 includes a RADAR system such as a weather RADAR system, a particle sensor, an image sensor, and/or sensors of any type; at least one such vehicle sensor 210B is susceptible to shadow regions.

The particle sensor may be an optical particle sensor such as the type disclosed in US Patent Application to Baumgardner et al., having a publication number of US 20140330459 A1 and published on November 6, 2014, which is hereby incorporated by reference in its entirety. The particle sensor may sense particles such as particles, *e.g.* dust, ash (*e.g.* volcanic ash), ice (*e.g.* high altitude crystal ice), and/or liquid. The image sensor may be an image sensor such as the type disclosed in US Patent to Creswick et al., having a patent number of 7,417,221 and issued on August 26, 2008; US Patent No. 7,417,221 is incorporated by reference herein in it entirety.

In an alternative embodiment, the vehicle processing system 210A is located outside of the vehicle sensor system(s) 210. However, in either case, the vehicle processing system 210A is deemed to be coupled to the vehicle sensor system(s) 210. In another embodiment, the vehicle processing system 210A is a state machine such as a processor coupled to a memory. However, a field programmable gate array and/or an application specific integrated circuit can be used in whole or in part as a substitute for the processor coupled to the memory. The processor may be a central processor unit or a digital signal processor. The memory may be a random access memory, a read only memory, a flash memory, and/or magnetic memory. In a further embodiment, the vehicle processing system 210A is coupled to the vehicle communications system 212. In yet another embodiment, the vehicle processing system 210A is configured to generate data for display that comprises remotely obtained data and data measured by the at least one sensor.

In one embodiment, the vehicle sensor processing system 210A includes a vehicle sensor database 210A-1. The vehicle sensor database 210A-1 includes information (about one or more geographic regions) such as obstructions, weather, animals, and/or other vehicles in such region(s). Some of this data is data about obstructions (*e.g.* mountains), weather (*e.g.* super cooled liquid water droplets that lead to icing, lighting, hail, and/or volcanic ash), animals (*e.g.* flocks of birds), and/or other vehicles (*e.g*. unmanned aerial vehicles and/or other aircraft) that are potentially dangerous; potentially dangerous data (which may include data not described above) is termed 'hazardous data' and is about hazards which the vehicle 101 may encounter.

Such information may be in two or three dimensions, *e.g.* X and Y coordinates for a local surface, or X, Y, and Z coordinates for a local volume. Such two dimensional data may be applicable for terrestrial vehicles, while the three dimensional data may be applicable for airborne, such as aircraft, and space borne vehicles. Three dimensional data may be referred to as three dimensional volumetric data.

In one embodiment, such data is obtained from the vehicle sensor system(s) 210 and externally, *e.g.* from the sensor system(s) 106 and/or the other vehicles(s) 105. In another embodiment, such data is obtained externally through the operations center 104; for example, the operations center 104 obtains such data from the sensor system(s) 106 and/or the other vehicles(s) 105. In a further embodiment, the vehicle sensor database 210A-1 is stored in the memory and executed by the processor. The term database as used herein means any format of storing data, including conventional databases, data files, etc. The illustrated databases may be combined with one another and/or other databases.

In one embodiment, the vehicle communications system 212 includes modems, radios and/or antennas to facilitate communications over the first communications link 108A with the operations center 104. The I/O(s) 214 include at least one display (such as touch screen(s)), keyboard(s), cursor control device(s) (such as joystick(s) and/or mice), a microphone and speech recognition system, and/or a speaker. The I/O(s) 214, for example, facilitate displaying data from the vehicle sensor system(s) 210 and/or the operating center 104. In another embodiment, one or more of the I/O(s) 214 can be part of the vehicle sensor system(s) 210.

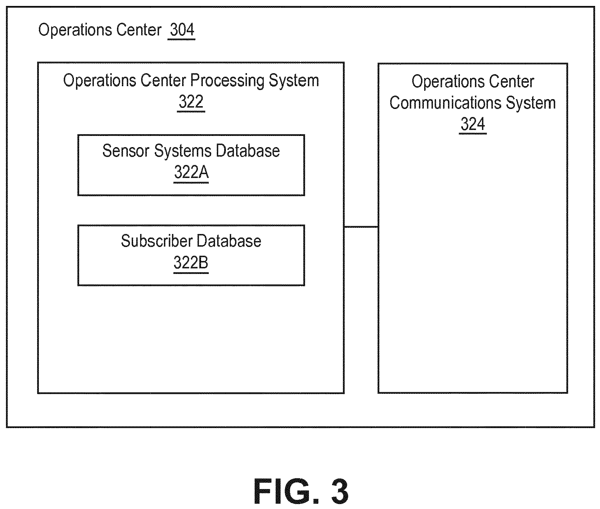

Figure 3 illustrates a block diagram of one embodiment of an operations center 304 which is configured to obtain, store, and transmit data, such as hazardous data, about an environment. Such data may be used to provide information, such as hazardous data, about shadow regions of vehicle sensor system(s) 210.

The illustrated operations center 304 comprises an operations center processing system 322 coupled to an operations center communications system 324. In one embodiment, the operations communications system 324 includes modems, radios and/or antennas to facilitate communications over the second communications link 108B and/or third communications link 108C respectively with the sensor system(s) 106 and/or the other vehicle(s) 105.

In one embodiment, the operations center processing system 322 is a state machine such as a processor coupled to a memory. However, a field programmable gate array and/or an application specific integrated circuit can be used in whole or in part as a substitute for the processor coupled to the memory. The processor may be a central processor unit or a digital signal processor. The memory may be a random access memory, a read only memory, a flash memory, and/or a hard drive.

In one embodiment, the operations center processing system 322 includes a sensor systems database 322A. The sensor systems database 322A stores information about one or more geographic regions, such as hazardous data (including, *e.g.* terrain, weather, animals, and/or other vehicles) in such region(s). In another embodiment, the operations center processing system 322 includes a subscriber database 322B that includes a list of subscribers and/or corresponding identifiers for the subscribers, *e.g.* vehicle operator name (such as airline name) and/or vehicle identifier (such as aircraft tail number and/or flight number).

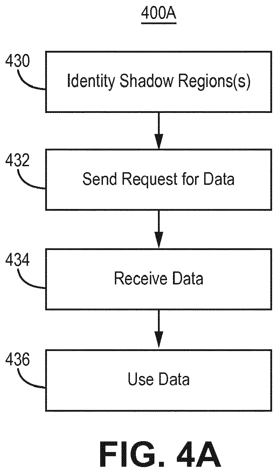

Figure 4A illustrates one embodiment of a method of requesting, receiving and using data for shadow regions 400A. To the extent that the embodiment of method 400A shown in Figure 4A is described herein as being implemented in the systems exemplified by Figures 1 through 3, it is to be understood that other embodiments can be implemented in other ways. The blocks of the flow diagrams have been arranged in a generally sequential manner for ease of explanation; however, it is to be understood that this arrangement is merely exemplary, and it should be recognized that the processing associated with the methods (and the blocks shown in the Figure) can occur in a different order (for example, where at least some of the processing associated with the blocks is performed in parallel and/or in an event-driven manner).

In block 430, identify at least one shadow region (shadow region(s)), *e.g.* with the vehicle sensor system(s) 210. For example, shadows regions of a RADAR system can be ascertained by identifying regions, in the operating range of the RADAR system, where no RADAR return signals (or RADAR return signals having a power level below a threshold power level) are detected by the RADAR system; this may arise due to absorption of the RADAR signal, *e.g.* by moisture, or by reflection of the RADAR signal, *e.g.* by due to an obstruction such as terrain or building(s).

In block 432, send a request (*e.g.* from the vehicle 201 to the operations center 104) for data, *e.g.* terrain, weather, animals, and/or other vehicles (*e.g.* at a location and/or in the travel path information of the vehicle 201) for shadow region(s). In one embodiment, the request is for hazardous data. In another embodiment, the request includes an identifier corresponding to the vehicle 101 making the request.

In block 434, receive data, *e.g.* from the operations center 104. In one embodiment, the received data is the requested data. However, the received data need not be the requested data. In another embodiment, the received data is only hazardous data (whether or not only hazardous data was requested). For example, the vehicle 201 may request all available information about shadow region(s), but only receive hazardous data about such shadow region(s).

In block 436, use the data. In one embodiment, integrate the received data with the data measured by the vehicle sensor system(s) 210. For example, e.g. on a display, identify the shadow region(s) (such as with curved lines) and include received data in such regions. In another embodiment, illustrated hazardous data within the shadow region(s), *e.g.* by drawing a polygon or another shape around the region of hazardous data. In a further embodiment, identify type of hazard(s) in the shadow region(s) by displaying symbol(s) corresponding to the hazard type(s), *e.g.* in the shape around the hazardous data. In yet another embodiment, display, e.g. with the I/O(s) 214, the received data with the data measured by the sensor system(s).

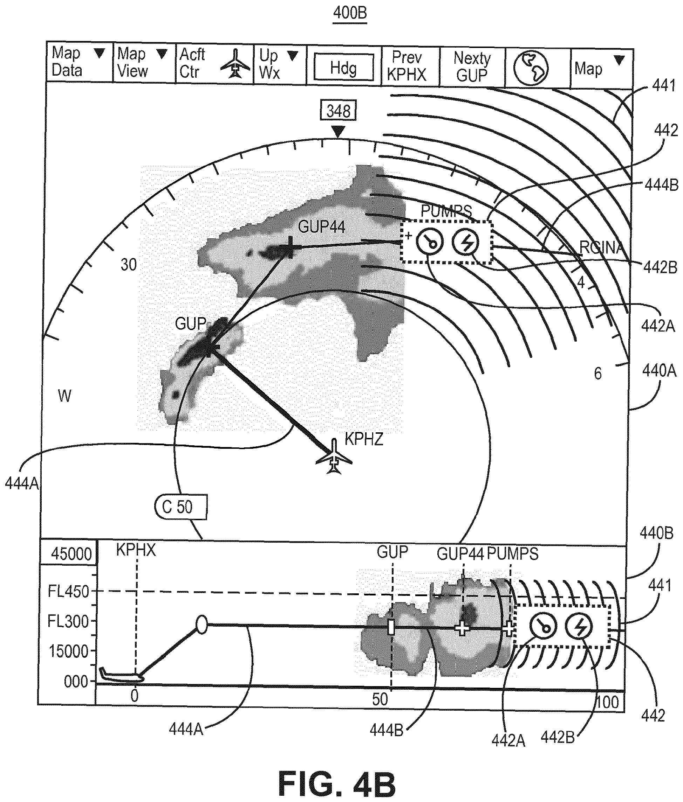

Figure 4B illustrates one embodiment of a weather RADAR system display exhibiting integrated measured data and received data 400B. The weather RADAR system display exhibiting integrated measured data and received data 400B includes a top view 440A and a lateral view 440B both of which illustrate a current travel path 444A and a prospective travel path 444B of a vehicle. A RADAR system for generating the display illustrated in Figure 4B is disclosed in US Patent to Cornell et al., having a patent number of 6,667,710 and issued on December 23, 2003; US Patent No. 6,667,710 is incorporated by reference herein in it entirety. US Patent No. 6,667,710 also describes three dimensional volumetric data in further detail.

If the vehicle is an aircraft, the travel path is a flight path. However, the example illustrated in Figure 4B is applicable to other vehicles that have a planned travel path.

Both the top view 440A and the lateral view 440B include a first visual symbol, *e.g.* curved lines, indicating a shadow region 441. In one embodiment, the first visual symbol may be in a first color, *e.g.* purple. Further, in the shadow region 441, a second visual symbol, *e.g.* a dotted line polygon, identifies a region of hazard(s) 442. In another embodiment, third visual symbol(s), *e.g.* a symbol for hail and a symbol for lightening, identify the specific type of hazard(s) 442A, 442B. In a further embodiment, if no third visual symbol(s) are shown, the second visual symbol may be empty (*e.g.* an empty polygon) or a solid (*e.g.* a solid polygon) of a single color, such as black; the empty or solid second visual symbol illustrates no hazardous data in the region of the second visual symbol. In yet another embodiment, the second and/or third visual symbol(s) are in a specific color type, *e.g.* black.

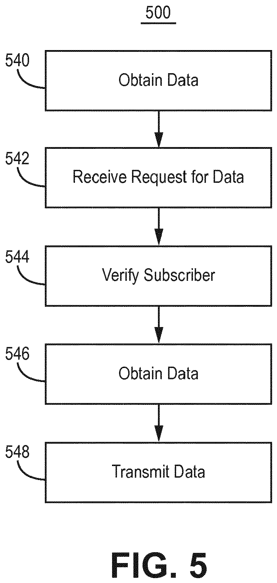

Figure 5 illustrates one embodiment of a method of an operations center configured to provide data for shadow regions 500. To the extent that the embodiment of method 500 shown in Figure 5 is described herein as being implemented in the systems exemplified by Figures 1 through 3, it is to be understood that other embodiments can be implemented in other ways. The blocks of the flow diagrams have been arranged in a generally sequential manner for ease of explanation; however, it is to be understood that this arrangement is merely exemplary, and it should be recognized that the processing associated with the methods (and the blocks shown in the Figure) can occur in a different order (for example, where at least some of the processing associated with the blocks is performed in parallel and/or in an event-driven manner).

In block 540, remotely obtain data about one or more geographic regions, e.g. two or three dimensional regions. In one embodiment, obtain the data from the sensor system(s) 106 and/or the other vehicle(s) 105. In another embodiment, store such data in the sensor systems database 322A. In a further embodiment, such data about weather, other vehicle(s) (*e.g*. location and/or travel path information), terrain, and/or hazard data receive a request from a vehicle for data about shadow region(s).

In block 542, receive a request, *e.g.* from a vehicle sensor processing system 210A, for data for one or more geographic regions that are shadow regions of a vehicle sensor system(s) 210. In one embodiment, the requested data is hazardous data.

In one embodiment, in block 544, verify that the requestor subscribes to a service that provides such data about shadow regions, *e.g.* by verifying that the subscriber identifier(s) provided by the vehicle are in the subscriber database 322B.

In block 546, obtain data, *e.g.* from the sensor systems database 322A. In one embodiment, obtain the requested data. However, the obtained data need not be the requested data. In another embodiment, the received data is only hazardous data (whether or not only hazardous data was requested). For example, the requested data may be all available information about shadow region(s), but the obtained data may only include hazardous data about such shadow region(s).

In block 548, transmit the obtained data, *e.g.* using the operations center communications system 324, to the vehicle. In one embodiment, the transmitted data is limited to hazardous data even if more additional data was obtained; alternatively the transmitted data may include data other than or in addition to hazardous data is transmitted.

### EXAMPLE EMBODIMENTS

Example 1 includes a vehicle sensor system configured to measure data in a geographic region comprising: a vehicle sensor processing system; at least one vehicle sensor, coupled to the vehicle sensor processing system, which is susceptible to shadow regions; wherein the vehicle sensor processing system is configured to be coupled to a vehicle communications system; and wherein the vehicle sensor system is configured to remotely obtain data about a shadow region in the geographic region.
Example 2 includes the vehicle of Example 1, wherein the remotely obtained data is data about obstructions, weather, animals, and/or other vehicles.
Example 3 includes the vehicle of Example 1, wherein the remotely obtained data is hazardous data.
Example 4 includes the vehicle of Example 1, wherein the vehicle processing system comprises a vehicle sensor database comprising data, measured by the vehicle sensor system and remotely obtained, for the geographic region.
Example 5 includes the vehicle of Example 1, wherein the at least one vehicle sensor comprises a RADAR system, and the measured data is derived from RADAR return signals.
Example 6 includes the vehicle of Example 5, wherein the RADAR system is a weather RADAR system.
Example 7 includes the vehicle of Example 1, wherein the shadow region arises due to electromagnetic absorbing precipitation.
Example 8 includes the vehicle of Example 1, wherein the geographic region is a three dimensional geographic region.
Example 9 includes the vehicle of Example 1, wherein the vehicle sensor processing system is configured to generate data for display that comprises remotely obtained data and data measured by the at least one sensor.
Example 10 includes a method, comprising: identifying at least one shadow region; sending a request for data about the at least one shadow region; receiving data about the at least one shadow region; and using the received data.
Example 11 includes the method of Example 10, wherein receiving data comprises receiving hazardous data.
Example 12 includes the method of Example 10, wherein using the received data comprises merging the received data with measured data.
Example 13 includes the method of Example 11, further comprising displaying the merged data.
Example 14 includes the method of Example 11, further comprising identifying hazardous data within shadow regions.
Example 15 includes the method of Example 11, further comprising identifying type of hazards in the shadow region(s).
Example 16 includes a method, comprising, remotely obtaining data about at least one geographic region; receiving a request for data for one or more geographic regions that are shadow regions of a vehicle sensor system; obtaining the requested data; and transmitting the requested data.
Example 17 includes the method of Example 16, wherein remotely obtaining data comprises remotely obtaining data from at least one of: at least one sensor system and at least one other vehicle.
Example 18 includes the method of Example 16, further comprising verifying that the request originated from a subscriber of a service that provides the data.
Example 19 includes the method of Example 16, wherein receiving a request for data comprises receiving a request for hazardous data.
Example 20 includes the method of Example 16, wherein receiving a request for data comprises receiving a request for data about obstructions, weather, animals, and/or other vehicles.

Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

## Claims

1. A vehicle sensor system (210) configured to measure data in a geographic region comprising:
a vehicle sensor processing system (210A);
at least one vehicle sensor (210B), coupled to the vehicle sensor processing system, which is susceptible to shadow regions;
wherein the vehicle sensor processing system is configured to be coupled to a vehicle communications system;
wherein the vehicle sensor system is configured to remotely obtain data about a shadow region in the geographic region; and
wherein the remotely obtained data is preferably hazardous data.

2. The vehicle of claim 1, wherein the vehicle sensor processing system is configured to generate data for display that comprises remotely obtained data and data measured by the at least one sensor.

3. A method, comprising:
identifying at least one shadow region (430);
sending a request for data about the at least one shadow region (432);
receiving data about the at least one shadow region (434), where the received data is preferably hazardous data; and
using the received data (436).

4. The method of claim 10, wherein using the received data comprises merging the received data with measured data.

5. The method of claim 11, further comprising displaying the merged data.

6. The method of claim 11, further comprising identifying hazardous data within shadow regions.

7. The method of claim 11, further comprising identifying type of hazards in the shadow region(s).

8. A method, comprising,
remotely obtaining data about at least one geographic region (540), where preferably the remotely obtained data is obtained from at least one of: at least one sensor system and at least one other vehicle;
receiving a request for data for one or more geographic regions that are shadow regions of a vehicle sensor system (542);
obtaining the requested data (546); and
transmitting the requested data (548).

9. The method of claim 16, further comprising verifying that the request originated from a subscriber of a service that provides the data (544).

10. The method of claim 16, wherein receiving a request for data comprises receiving a request for hazardous data.
